(19) Europäisches Patentamt
European Patent Office
Office européen des brevets

(11) **EP 3 612 757 B1**

(12) **EUROPEAN PATENT SPECIFICATION**

(45) Date of publication and mention
of the grant of the patent:
**17.02.2021 Bulletin 2021/07**

(51) Int Cl.:
***F16K 37/00*** *(2006.01)*     ***F16K 17/04*** *(2006.01)*

(21) Application number: **18719149.9**

(22) Date of filing: **19.04.2018**

(86) International application number:
**PCT/EP2018/060105**

(87) International publication number:
**WO 2018/193060 (25.10.2018 Gazette 2018/43)**

(54) **PRESSURE SAFETY VALVE ACTIVATION SENSOR**

DRUCKSICHERHEITSVENTILAKTIVIERUNGSSENSOR

CAPTEUR D'ACTIVATION DE SOUPAPE DE SÉCURITÉ DE PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2017 NO 20170651**

(43) Date of publication of application:
**26.02.2020 Bulletin 2020/09**

(73) Proprietor: **Trisense AS
5160 Laksevåg (NO)**

(72) Inventors:
• **GISMERVIK, Øystein
5170 Bjørndalstræ (NO)**

• **KARLSEN, Ronny
5019 Bergen (NO)**
• **SANDØ, Jørn R
5236 Rådal (NO)**

(74) Representative: **Gill Jennings & Every LLP
MTH
The Broadgate Tower
20 Primrose Street
London EC2A 2ES (GB)**

(56) References cited:
**WO-A2-01/42693**     **JP-A- S5 917 079
US-A1- 2003 019 277**

## Description

## TECHNICAL FIELD

The present invention relates to a pressure safety valve activation sensor unit and a method for detecting activation of a pressure safety valve.

## BACKGROUND

A pressure safety valve (PSV) is a safety device designed to protect a pressure vessel or system in the event of an overpressure. Safety valves are key components in processing plants worldwide. Large quantities are installed in the oil and gas industry, chemical, pharmaceutical and similar processing plants operating with gas or liquids under pressure. The primary purpose of a safety valve is the protection of life, environment and system performance by venting the gas or liquid from a pressurized system.

When a situation arises that causes the pressure in the system to rise to a dangerous level, the safety valve will be the only remaining device that prevents a catastrophic failure. The excess gas or liquid is released into the atmosphere via the safety valve. When a safety valve is activated by the high pressure, the valve seat may be damaged, and this will result in leakage of process gas.

In most plants where multiple PSVs are installed, maintenance programs are established for scheduled inspections and testing of all PSVs in order to find and repair damaged valves. This operation is conducted typically every 6, 12 or 24 months depending upon criticality in operation. As an example, valves represent 30% of all maintenance work in the North Sea and the maintenance of safety valves make up 50% of valve maintenance.

Monitoring equipment is available (typically acoustic sensors) and used to a certain extent for the oil and gas industry today, however the cost of the existing monitoring systems are extensive.

Comparable sensor systems that can be mounted on a PSV are normally hardwired and require an external power supply to operate. Such systems become cost prohibitive to install on other than very critical valves. Both the equipment and installation costs with cabling adds to the overall costs and prevents use across a larger fraction of the safety valves of a system. Also, the space requirement for wired sensors limits the area of application.

For example, US2003/019277 describes a system and method for monitoring a pressure relief device using a release sensor.

Accordingly there is a need for a monitoring system which makes progress in overcoming the above problems with conventional monitoring procedures and known monitoring equipment. In particular, a low cost system is required which can operate over a large area and can reliably identify the activation of pressure safety valves.

## SUMMARY OF THE INVENTION

The present invention seeks to provide a pressure safety valve activation sensor unit, comprising: a sensor housing for placement on an outside of a pressure safety valve; a print circuit board assembly comprising one or more micro sensors, the one or more micro sensors including an accelerometer; a processing unit configured to extract acceleration data indicative of valve vibrations registered by the accelerometer, and compare the acceleration data to a predetermined vibration pattern associated with the activation of the pressure safety valve to determine whether an activation event of the pressure safety valve has occurred; and a transmitter for wirelessly transmitting activation event data to an external receiver.

The pressure safety valve activation sensor of the current invention provides a reliable and cost-effective means to detect pressure safety valve activation events. The use of a comparison of detected acceleration data against predetermined data indicative of an activation event provides fast and reliable detection of "pop" events. The use of micro sensors, in particular in the form of an accelerometer, means the sensor unit is small, lightweight and straightforward to attach the outside of a pressure safety valve. Such micro sensors are also energy efficient and low cost. The low cost of the sensor unit allows the installation in large numbers on all PSVs and accordingly allows the operator to gain a complete picture of the current state and operational history of the PSVs. Such information can be used for detailed maintenance planning not possible with current systems. It further reduces the related safety risk with operating faulty valves and reduces the cost associated with safety procedures which involve the replacement of valves long before the stage they are liable to failure due to not having sufficient information on the wear of the valves.

No cabling is needed for sensor operation, data handling or transmissions. The sensor may be battery driven and designed for long operating life due to low power consumption. However, the sensor can be cabled in alternative examples of the invention. The sensor uses wireless technology for data transmittal and communications reducing the manual burden in checking multiple pressure sensors and significantly reducing maintenance costs.

Further advantages of the above defined pressure safety valve activation sensor include:

a) The sensor unit is easy to operate and requires no field set-up/calibration and is readily configurable for use with a companion app operable on a personal device or user equipment;
b) It is easy to install and, as no cabling is required, the installation can be performed by using a simple attachment means, such as a dedicated strap band for sensor unit fixation. No further set-up is required;
c) The sensor technology is low cost and due to easy installation also the installation is low cost; and
d) There is a low threshold in installing the system. Since all that is required is a sensor unit plus a user interface equipment, the system will work with one sensor up to multitude of sensor units.

The micro sensors are preferably based on MEMS (Micro Electro Mechanical Systems - also encompassing NEMS or Nano Electro Mechanical Systems) and using information from these micro sensors integrated in the PCB/sensor unit. By means advanced algorithms and information extracted from the dedicated micro sensors, a low cost sensor unit is developed for the detection of an event, in particular pressure safety valve (PSV) activation.

The phrase "predetermined vibration pattern associated with the activation of the pressure safety valve" is intended to refer to stored acceleration data characteristics which have been previously identified as being associated with an activation event. This stored characteristic data may in the form of ranges of threshold values which one or more properties of the detected acceleration data must fall within in order for the sensor unit to determine the occurrence of an activation event.

Preferably the processing unit is configured to determine an activation event has occurred when the extracted acceleration data satisfies one or more of: the magnitude of the acceleration is above a predetermined threshold value; the duration of the vibrations is above a predetermined threshold value; the frequency of vibrations is within a predetermined range; and the calculated excess Kurtosis of the vibration data is within a predetermined range. Each of these characteristics may be used individually or in combination to determine whether the detected vibrations correspond to an activation event depending on a balance between level of certainty and computational requirement and each of the characteristics may be preferable in different environments or with different valves.

The above measures provide straightforward, computationally efficient and reliable ways to identify the occurrence of a pressure safety valve activation or "pop" event. In certain examples the processing unit is configured to compare the acceleration data to a predetermined vibration pattern to determine that an activation event has occurred by determining each of the following conditions are met:

(i) the extracted acceleration data exceeds a predetermined threshold magnitude value;
(ii) the extracted acceleration data is within a predetermined frequency range;
(iii) conditions (i) and (ii) are met for a duration which exceeds a predetermined minimum time threshold.

This combination of parameters has been found to be a particularly reliable method of identifying activation events which is computationally efficient.

Preferably the processing unit is configured to determine conditions (i) and (ii) are met by: extracting X, Y and Z components of the vibration data from the accelerometer; high pass filtering the X, Y and Z components of the vibration data; calculating the root mean square of the filtered X, Y and Z components of the vibration data; low pass filtering the calculated root mean square; comparing the filtered root mean square to a predetermined threshold magnitude value.

Preferably the processing unit is configured to determine condition (iii) is met by: repeatedly performing the above steps for determining conditions (i) and (ii) while the filtered root mean square exceeds the predetermined threshold magnitude value; determining an activation event duration as the time during which the filtered root mean square remains above the predetermined detection limit; comparing the activation event duration to a predetermined minimum time threshold.

In this case the characteristic vibration pattern against which the extracted data is compared is defined by the frequency range provided by the filters and the threshold magnitude of the root mean square (RMS). Advantageously the high pass filtering removes the effects of gravity and the low pass removes additional noise from the extracted acceleration data. In certain preferable examples, the processing unit is configured to repeatedly perform the above steps while the filtered root mean square exceeds the determined detection limit and determine an activation event duration as the time during which the filtered root mean square exceeds the predetermined detection limit.

By using three axis acceleration data the sensor is able to determine vibrations in any direction. Therefore vibrations are accurately detected irrespective of mounting direction.

In certain preferable embodiments, the excess Kurtosis of the extracted acceleration data is used in addition to the above parameters to increase the reliability of identifying a detection event.

Kurtosis is a measure of the peakedness of a distribution. The (normalized) kurtosis statistic is calculated from the extracted acceleration values with the following formula:

$$K = \frac{\frac{1}{n-1}\sum_{i=1}^{n}(x_i - \bar{x})^4}{\sigma^4}$$

Kurtosis is used in conjunction with skewness statistics to determine whether an output is approximately Normally distributed. A Normal distribution has a kurtosis of 3 so any output that looks symmetric and bell-shaped, has zero skewness and a kurtosis of 3 can be considered approximately Normal.

The excess kurtosis of a distribution is the difference in kurtosis relative to a normal distribution and is therefore calculated according to the following formula:

$$K = \frac{\frac{1}{n-1}\sum_{i=1}^{n}(x_i - \bar{x})^4}{\sigma^4} - 3$$

The excess kurtosis has been found to be a particularly reliable statistic in identifying acceleration data characteristic of an activation event. Furthermore the kurtosis requirements allows vibrations due to an activation event to be distinguished from background noise commonly found at a processing plant as the vibrations associated with an activation event has a greater peakedness than the vibrations due to random noise. Preferably the excess kurtosis of each of the X, Y and Z components of the acceleration data is calculated then a mean kurtosis value is compared to a minimum threshold to determine whether an activation event has occurred.

In some embodiments, a maximum event duration is set. If the accelerometer data meets the requirements for longer than a maximum time threshold an excess kurtosis is calculated on the data collected during this time period and whether or not an event has occurred is determined accordingly. This avoids a situation in which an event is missed when there is a prolonged period of background noise during which an event occurs. In such a situation if excess kurtosis is calculated on the entire period the value may be below the threshold due to the event being masked by the long term statistics associated with the noise. By calculating kurtosis on the data when a certain duration is exceeded it is ensured that the kurtosis of an event is recognised within the noise.

Preferably the event data comprises one or more of the event time, date, duration and magnitude of vibration. The event data may be stored in a memory within the sensor unit in addition to or prior to being transmitted with the transmitter to an external receiver.

The external receiver may be in the form of a mobile device, a smartphone, a gateway, an internet of things (IoT) hub or other form of receiver with means to indicate the event data to a user. Event data transmitted from the sensor unit can be received and displayed in an "App" installed in a cellphone, tablet or by a gateway transmitting event data to a data cloud or to the control room. Event data can be transmitted utilizing Bluetooth Low Energy communication.

Further, event data from several independent sensor units can be received in the "app". The App can automatically connect to all PSV-activation detection type sensor units included in a current task, and report back regarding which sensor units an event has occurred. The report may comprise colouring/labelling sensor units or pressure safety valves in a list. In this way a large number of valves may be monitored simultaneously.

In preferable examples of the invention the sensor unit is configured to switch between a lower power mode, in which the sample rate of the accelerometer is lower, and a detection mode in which the sample rate of the accelerator is higher. More particularly, the sensor unit may subsist in a low power mode until the accelerometer detects an acceleration above a certain threshold magnitude at which point it switches to the detection mode during which the processing unit continues to extract acceleration data at a higher sample rate and perform the comparison to the predetermined vibration pattern as defined above. This allows the energy source (for example the battery) to power the sensor unit for a much longer period of time, reducing the maintenance costs.

In certain examples of the present invention, the one or more micro sensors further include: an acoustic transducer; wherein the processing unit is further configured to extract sound data from the acoustic transducer and compare the extracted sound data to a predetermined sound pattern associated with the flow of fluid characteristic of a leak in the pressure safety valve in order to determine the presence of a leak; wherein the transmitter is further arranged to transmit leak data to an external receiver. Preferably the acoustic transducer is adapted to detect frequencies in the range up to 1 MHz.

In this way, the sensor unit is additionally able to determine the presence of a leak following an activation event. By comparing the extracted sound data to a predetermined sound pattern, the magnitude of the leak can be reliably identified and this information transmitted to a user via the external receiver.

In a further aspect of the invention there is provided a method for detecting the activation of a pressure safety valve, the method comprising the following steps: placement of a pressure safety valve activation sensor unit on an outside of the pressure safety valve, where the sensor unit comprises one or more micro sensors including an accelerometer; extracting acceleration data registered by the accelerometer, indicative of valve vibrations; comparing the acceleration data to a predetermined vibration pattern associated with the activation of the pressure safety valve to determine whether an activation event of the pressure safety valve has occurred; and wirelessly transmitting activation event data to an external receiver.

The sensor unit and method for detecting the activation of a pressure safety valve according to the present invention provide a low cost straight forward solution for monitoring pressure safety valves and allowing activation events to be reliably identified. This results in significant cost savings due to the reduction in manpower required in checking and maintaining valves and an increase in safety associated with identifying the wearing of components by accurately monitoring their usage.

Due to the flexibility and low cost of the sensor technology, it may be applied in typical process installations such as the Oil & Gas industry (up-, mid- and downstream), the chemical and pharmaceutical industries, breweries, pulp & paper industry or any industry which requires remote monitoring of safety valves. Information gathered by the PSV activation sensor unit can be used for enhanced maintenance programs (cost efficient WCM) or the information from the sensor unit can be used for process information and process optimization.

**BRIEF DESCRIPTION OF THE DRAWINGS**

Embodiments of the invention will now be described, by way of example only, with reference to the accompanying drawings, in which:

Figure 1 shows a pressure safety valve activation sensor unit according to the invention;

Figure 2 shows the pressure safety valve activation sensor unit mounted to a pressure safety valve;

Figure 3 shows a flow chart indicating the comparison of the acceleration data to the predetermined vibration data according to an embodiment of the invention;

Figure 4A shows a flow chart indicating processing steps performed by the processing unit according to an embodiment of the invention;

Figure 4B shows a flow chart indicating processing steps performed by the processing unit according to another embodiment of the invention;

Figure 5 shows a graphical representation of the extracted acceleration data according to an embodiment of the invention;

Figure 6 shows a user interface on an app arranged to display the transmitted event data according to an embodiment of the invention.

**DETAILED DESCRIPTION**

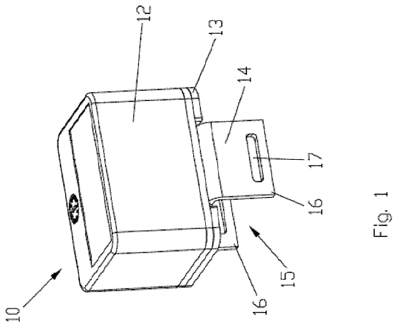

Figure 1 illustrates a pressure safety valve activation sensor unit 10 according to the present invention. The sensor unit 10 comprises a sensor housing 12 for placement on the outside of a pressure safety valve. The sensor housing 12 houses a print circuit board (PCB) assembly which comprises one or more micro-sensors, including an accelerometer. The sensor unit 10 also includes a processing unit within the housing 12. The processing unit is configured to extract acceleration data indicative of valve vibrations registered by the accelerometer, and compare the acceleration data to a predetermined vibration pattern associated with the activation of the pressure safety valve 20 to determine whether an activation event of the pressure safety valve has occurred. The sensor unit also includes, either external or internal to the housing 12, a transmitter for wirelessly transmitting activation event data to an external receiver.
In the embodiment of Figure 1 the sensor housing has a substantially rectangular shape with a flat base 13 arranged to contact the pressure safety valve and be held in place by the fixation base 14. The shape of the housing may vary as suitable for the particular application and for example the size of the battery. The micro-sensors are arranged within the housing such that vibrations of the pressure safety valve are registered reliably by the accelerometer. For example the PCB may be mechanically coupled to the base internal to the housing 12 such that vibrations are communicated to the accelerometer within minimal damping due to relative movement of the internal components.
In the embodiment of Figure 1 the sensor housing 12 has an integrated fixation base 14 which allows the sensor unit 10 to be attached to a valve. The fixation base 14 may equally be a separate unit which is attachable to the sensor housing 12 to provide the attachment to a pressure safety valve (PSV) 20.
The fixation base 14 can take a number of different forms to provide easy and secure attachment to a pressure safety valve. In the example of Figure 1, the fixation base 14 comprises a U-shaped unit, the base 15 of which is integral to the base 13 of the sensor housing with two arms 16 which extend perpendicularly from the base of the sensor housing 13. Each arm 16 has an opening 17 which can receive a strap or band which passes through the openings 17 to securely fix the sensor unit 10 to a pressure safety valve. A simple and secure approach is to use metal clamp band which surrounds part of the valve 20.
The fixation means may take a number of other forms to provide the central function of providing a secure and long lasting attachment and the mechanical communication necessary to allow the accelerometer to detect vibrations of the valve. Other possible fixation means include a metal base which extends the sensor away from the valve surface.

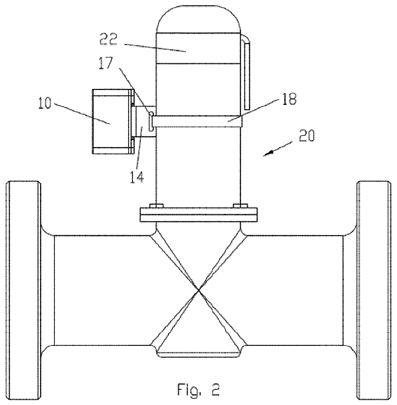

Figure 2 illustrates the sensor unit 10 illustrates the sensor unit 10 attached to a pressure safety valve 20. A metal clamp band passes around the valve housing 22 and through the openings 17 of the fixation base 14 to securely fix the base 13 of the sensor unit 10 to the valve. In this way vibrations of the valve body 22 are transported to the sensor unit 10 and registered by the accelerometer.
The invention can be mounted to any type of PSV 20 and the precise attachment point on the valve housing may vary as long as the vibrations may be reliably registered by the accelerometer. In preferable embodiments the sensor unit is attached to the base of the valve body 22 as illustrated in Figure 2. The sensor unit 10 may be attached to the same position at which the predetermined vibration patterns were determined in calibrating the sensor unit.
Normally the sensor unit is fixed to the pressure safety valve spring housing. For pressure safety valves based on a weight force rather than a spring, the attachment is preferably on the pressure safety valve body/housing itself. The sensor unit can pick up the vibrations and determine whether an activation event has occurred for both types of PSV.

The PSV characteristics may change from application to application, requiring the sensor unit 10 to be uploaded with different programmable characteristics related to the specific PSV application. For example the vibration pattern indicative of an activation event may change according to the pressure and medium. The sensor unit may be updated with the required characteristic vibration pattern information wirelessly or locally as explained in greater detail below.

The sensor unit 10 preferably further comprises a battery to power the components of the sensor unit. The sensor unit battery is programmed to rest in a deep sleep mode to save battery power and will only be active during the event detection/registration phase and during communication with the external receiver. This means the sensor unit can remain on the pressure safety valve for long periods of time in between battery changes or recharges and does not require expensive power cabling.

In certain embodiments the sensor unit may include another power source instead of or in addition to the battery. For example a solar panel or other form of energy harvester may be included to power the device and/or recharge the battery to avoid the expense associated with maintenance and changing the battery.

The wireless transmitter may be positioned internal or external to the device housing. In preferable embodiments the transmitter is a Bluetooth Low Energy transmitter providing wireless communication by Bluetooth Low Energy for example BLE 4.2 or 5.0 (or any subsequent release). This allows for long rage communication with low energy usage such that sensor units may be positioned on valves over a large area range with data received at a central receiver. BLE is also advantageous in the reduced energy usage reducing the burden in maintaining the sensor units.

**Pressure safety valve activation event detection**

When a PSV is activated, the valve disc or sealing mechanism will be moved by excessive pressure. This action will generate strong vibrations. The processing unit of the sensor unit 10 can be configured to recognise such vibrations in the data extracted from the accelerometer and determine an activation event has occurred.

The invention uses an advanced algorithm combining and calculating information from the accelerometer. In some embodiments the event will be triggered (determined) based on a vibration occurring with acharacteristics given by (i) a given minimum acceleration/deceleration magnitude amin within (ii) a given frequency range fmin < f < fmax for (iii) a given minimum time tmin.

In addition to the accelerometer the micro sensors integrated in the sensor unit 10 may include, a magnetometer, an acoustic transducer and a gyroscope. The processing unit of the sensor unit 10 is programmed to listen to significant vibrations detected by the accelerometer and compare these to a predefined vibration pattern.

Once the pattern characterizing a PSV activation is detected, the sensor unit 10 will record the event by logging event time and date as event data.

The communication between the sensor unit 10 and the receiver may be provided by an wireless communication means but preferably is provided by Bluetooth Low Energy (BLE any version 4.2 and 5.0 or new releases to be implemented) and thereby classifying this an IoT sensor. The received data can be uploaded from the receiver (such as a PDA or via a gateway) to a data network/cloud where data can be presented for further analysis and actions.

**Processing algorithm**

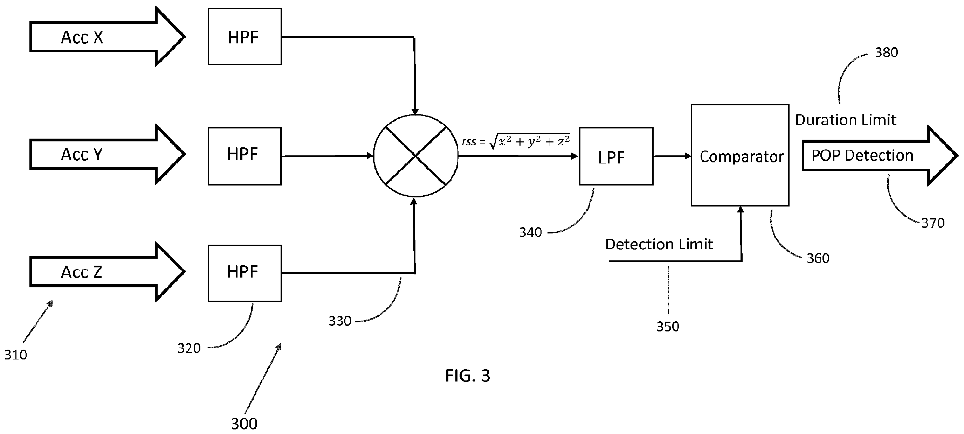

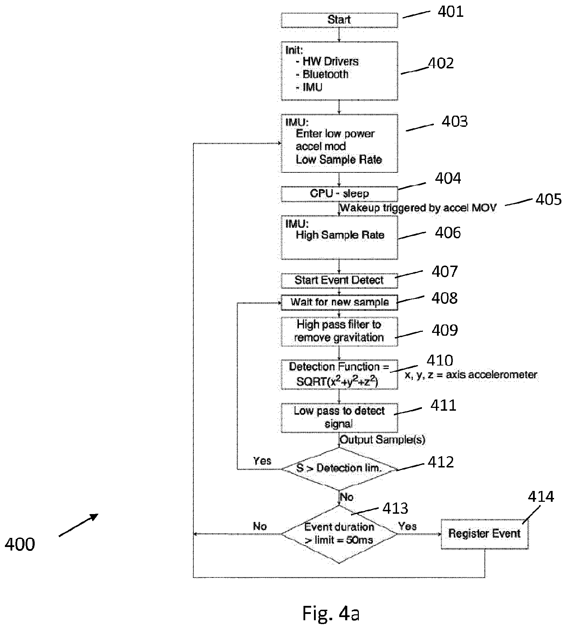

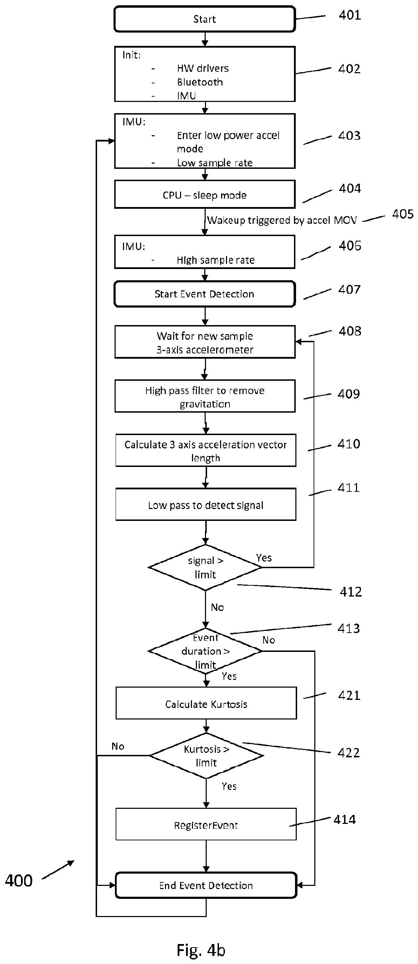

The details of the steps performed by the processing unit to compare the received accelerometer data to the predetermined vibration pattern to determine an activation event will not be described with reference to Figures 3 and 4.

Figure 3 schematically illustrates the processing steps performed on the extracted acceleration data received from the accelerometer. The diagram shows the initial processing steps performed on the data to place it in a condition in which it can be compared with a predetermined vibration pattern to determine whether or not an activation event of the pressure safety valve 20 has occurred.

At step 310 the X, Y and Z components of the acceleration data detected by the accelerometer are received by the processing unit. The processing unit firstly performs high pass filtering of each individual component which removes the component of the data relating to forces due to gravitation. This allows a more accurate indication of the magnitude of the vibrations due to valve movement to be determined.

At step 330 the high pass filtered acceleration data components are combined by performing a root mean squared calculation on the acceleration components associated with each sample to time interval. This reduces the acceleration vector into a magnitude value for ease of comparison with a predetermined vibration pattern.

At step 340 the root mean squared data is low passed filtered which removes noise due to other vibrations of the valve not associated with an activation event. The high pass filter and low pass filter represent upper and lower bounds on the frequencies of vibration associated with an activation event and have been determined from prior investigation into the vibrations patterns exhibited by certain pressure safety valves when an activation event occurs.

At step 350 a detection limit is provided to the comparator. The detection limit may be adapted to provide greater or lesser sensitivity of the sensor unit to detecting a activation event. This may also change depending on the type of PSV and the application, for example the type of fluid contained within the valve and the operating pressure. The detection limit has been predetermined for the required valve and may be saved in a memory of the sensor unit 10.

The detection limit value to which the low pass filtered route means squared value is compared is determined by prior experimentation with various pressure safety valves to determine a threshold which can accurately and reliably distinguish between activation events and other vibrations caused by noise or the surroundings.

At step 360 the processing unit compares the low pass filtered magnitude vibration value to the detection limit, if the value exceeds the detection limit then the processing unit determines that a pressure safety valve activation event has occurred. This may be saved as event data, where the processing unit saves an occurrence of an event with the time and date and, optionally, further information about the activation event such as the duration and magnitude of the accelerations.

As explained in more detail with reference to Figure 4A, at this stage when the comparator has determined that the magnitude of the acceleration data which has been low passed filtered is above the detection limit the processing unit may continue to repeat steps 310 to 360, receiving new acceleration data and filtering and comparing to the detection limit to determine whether the activation event is still occurring. In this way, the steps shown in Figure 3 are repeated until the comparator determines that the low pass filtered magnitude value has dropped below the detection limit. At this stage, the processing unit determines that the activation event has ended and additionally may record an event duration to the event data. Optionally, the duration detected may also be a threshold associated with the predetermined vibration pattern, whereby an event is only recorded when the comparator determines the data is above the detection limit for longer than a predefined duration. Optionally, the kurtosis detected may also be a threshold whereby an event is only determined when the calculated kurtosis is above a predetermined threshold value, as is described in more detail with reference to Figure 4B

Figure 4A illustrates a more detailed flow diagram showing the steps performed by the processing unit in a pressure safety valve at activation sensor unit according to a further embodiment of the present invention.

At step 401 the sensor unit is started up. This may be performed manually when the sensor unit is fitted to the valve or remotely by wireless communication with a receiver in the sensor unit such that individual sensor units may be switched on or off depending on the usage of various pressure safety valves.

At step 402 the hardware drivers, Bluetooth and Inertial Measurement Unit (IMU - comprising the PCB and one or more microsensors) are initiated and activated. Again, this can follow immediately after starting the device upon mounting the sensor to a pressure safety valve or it can equally be performed remotely via wireless or cable communication channels to the sensor unit.

At step 403 the sensor unit defaults to a low power or sleep mode in which the IMU enters a low power mode and the accelerometer is set to a low sample rate. In this way, the sensor unit 10 does not waste energy between activation events and can be powered by a small battery source for a long period of time, saving costs associated with maintenance and replacing the energy source. As described above, the battery may be replaced or complemented with an additional power supply such as a solar panel which recharges the battery during use. At step 404 the processing unit (CPU) is in sleep mode and does not perform the above described processing steps in which the acceleration data is compared to the predetermined vibration pattern.

At step 405 the device is woken up on being triggered by an accelerometer reading. In particular, the accelerometer detects a vibration above a minimum threshold then the processing unit switches to a high power mode in which an increased sample rate of the accelerometer is utilised. Again, the wake up threshold for the magnitude of detected vibration may be set according to the environment and type of PSV. This step is illustrated at 406 in which the IMU is set to a high sample rate and frequently detects acceleration data at a predetermined time interval.

Preferable sample rates for the low sample mode and high sample mode are around 8Hz and around 200 Hz respectively.

At step 407 the processing unit is switched to detection mode in which it performs the steps of comparing the accelerometer reading to determine whether activation of the pressure safety valve has taken place.

At step 408 the processing unit receives new sample data from the accelerometer. This is in the form of the individual X, Y and Z components of the acceleration readying from the accelerometer as described above.

At step 409 the individual acceleration components are high pass filtered to remove the effects of gravitation and at step 410 the processing unit calculates the detection function, namely the square route of each of the X, Y and Z components squared.

At step 411 the square route detection function is low passed filtered to remove noise to allow the signal to be detected.

At step 412 the output sample (the calculated detection function) is compared against the detection limit. As stated above, the detection limit is a predetermined value which has been identified as dividing acceleration data associated with an activation event from background vibration data. If the outcome of this comparison is positive and the signal is above the detection limit the processor waits for a new sample and the process returns to step 408 in which new X, Y and Z components of acceleration data at the next time interval are received from the accelerometer. In this way, steps 408, 409, 410, 411 and 412 are looped as long as the vibrations remain above this threshold level. In other words, along as the vibrations remain above this level, the accelerometer samples are filtered and statistical information is collected. When the vibrations subside, and the output sample is no longer above the detection limit the processing unit proceeds to step 413.

At step 413 the processing unit compares the event duration recorded (the time during which the output sample signal is above the detection limit) to a threshold time value. The threshold time value will depend on the type of PSV and the environment in which the PSV is placed and the corresponding background noise. In this case the threshold time value is 50ms, above which an event is registered.

If the outcome of this comparison is positive and the event has been determined to last for longer than the threshold value the data is registered as an event and stored as event data which is transmitted wirelessly to the external receiver. If the vibration data proceeds for less than the threshold value then the processor reverts back to step 403 and returns to low power mode until the next acceleration switches the sensor unit into the detection mode again.

It will be appreciated that the steps of Figure 4 may be summarised as detecting an activation event when the acceleration data displays the following pattern: namely, it has (i) a given minimum acceleration/deceleration magnitude $a_{min}$ within (ii) a given frequency range $f_{min} < f < f_{max}$ for (iii) a given minimum time $t_{min}$. The frequency range represents the cut off from the high and low pass filtering.

Figure 4B illustrates an alternative method performed by the processing unit in which several further steps are added to the method of Figure 4A in order to increase the accuracy with which an activation event is determined.

The method of Figure 4B is the same as that of Figure 4A, apart from the additions explained below, and the corresponding steps are labelled with the same reference numerals in both figures.

In the method of Figure 4B if the recorded event duration is greater than the minimum threshold duration at step 413, rather than proceeding directly to registering an event at step 414, further comparison steps 421, 422 are performed.

In this preferred embodiment of Figure 4B the further steps are added between steps 413 and 414 in the flow diagram of Figure 4A.

At step 421 the sample excess kurtosis for each of the x, y and z components of the acceleration data is calculated according to the following formula:

$$K = \frac{\frac{1}{n-1}\sum_{i=1}^{n}(x_i - \bar{x})^4}{\sigma^4} - 3$$

and an average excess kurtosis across the components is calculated.

As described above, this statistic represents how the peakedness of the data differs from that of a normal distribution. This has been found to provide a reliable method of distinguishing between vibrations caused by an activation event and background environmental vibrations.

At step 422 the average kurtosis value is compared to a kurtosis threshold.

The kurtosis threshold may be around 0.5, below which an event is not registered. The value has been shown to provide a reliable threshold to distinguish vibrations due to pop events from background/environmental vibrations.

If the calculated average kurtosis exceeds the threshold the processing unit proceeds to step 414 and registers an event. Otherwise if the kurtosis does not exceed the threshold the processing unit returns to the low power, low sample rate mode at step 403.

In some embodiments a maximum event duration may be employed. In these examples of the method, during the loop of steps 408 to 412, the current event duration is checked against a maximum event duration limit. If the current event duration exceeds the maximum event duration limit the loop stops and the excess kurtosis is calculated on the vibration data collected during the current event (the period corresponding to the maximum event duration). This is to ensure the method is robust to prolonged periods of vibration due to noise. For example, if there is a long period of environmental vibration of magnitude above the signal limit and an event occurs within this period, without the maximum duration limit the excess kurtosis will be calculated on the entire period that the vibration exceeds the signal limit and therefore the kurtosis of the actual pop event will not influence the statistics significantly enough for a pop event to be detected. Therefore, by employing a maximum event duration limit in a period of prolonged vibration, the data is split into smaller periods of time (of the event duration limit) and the kurtosis calculated on each, meaning in any one period an event will be statistically significant and will be detected by the kurtosis step 422.

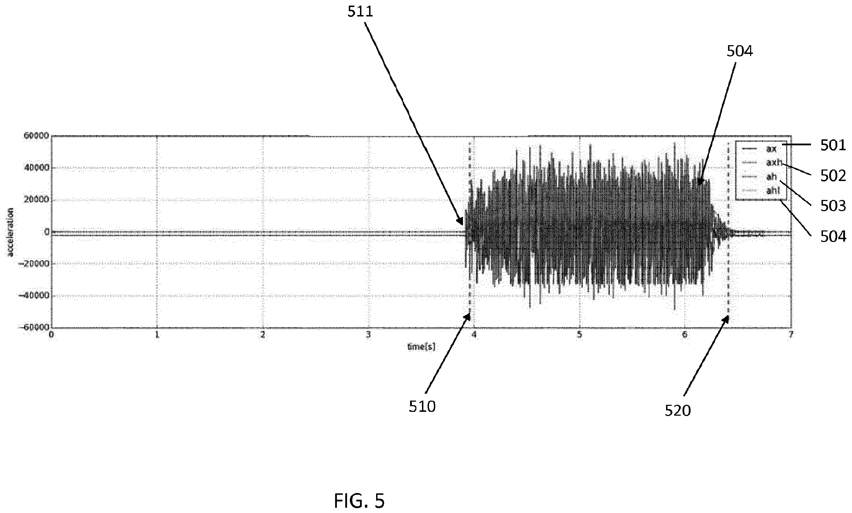

Figure 5 graphically illustrates the processing steps performed on the received accelerometer data.

The graph includes raw x-axis data (501), high pass filtered x axis data (502), high pass filtered vector length of xyz data (503), and low pass filtered output (504) of high pass filtered data (503). 503 and 504 are the root mean square of the components. At point 511, the accelerometer senses the initial vibrations and the sensor unit switches to the high sample rate detection mode.

The RMS detection function is calculated using the filtered X, Y and Z components as input and is shown on the graph as 504. During the initial vibrations at point 511 the detection function is lower than the detection limit so at step 412 and 413 in Figure 4 the answer is no and the sensor unit returns to step 403. At the point indicated by dashed line 510 the detection function exceeds the detection limit so steps 408 to 412 are continuously looped on each new data point at each sample interval of the accelerometer. At point 520 the detection function drops below the detection limit and therefore at step 412 in Figure 4 the processing unit proceeds to step 413 and calculates the event duration as the time between the event start point 510 and the event end point 520. As this is longer than the event duration limit the illustrated acceleration signals are determined as an activation "pop" event.

Event data is wirelessly transmitted to the receiver and may optionally be saved in a memory in the sensor unit 10. The event data may include the time and data, the duration of the event and details such as the magnitude and excess kurtosis calculated by the processing unit.

**The receiver**

The event data is transmitted with the transmitter to an external receiver. The receiver may take various different forms. For example the external receiver may be a handheld user device, a central receiver which then distributes the information onwards or the cloud.

In preferable embodiments of the invention the receiver is in the form of an application ("App") running on a user device such as a cellphone, tablet or alternatively a gateway using Bluetooth front end, that is transmitting wirelessly or via cable data to a cloud solution or control system. The App can for instance be an Android App installed on a mobile phone, tablet or other handheld device. However, other apps/programs for other platforms may of course be used. The App will include the possibility to import a configuration file (for instance xml file or similar) which maps device UUID to device ID/name, possibly location, last operational- and maintenance available data and which specifies if the device is included in the current task. The configuration file is intended to have a minimum of three fields: UUID, Name/ID, "included in current task". The last field is either 0 or 1. If a configuration file is loaded, the Name/ID shown for a device is the one from the configuration file. Data read from a configuration file will be retained if the App is closed and restarted.

A new configuration option not visible to the user (only used for the operational modes) is included which determines which devices are shown in the list of devices: Only devices marked as "included in current task" or all known devices (either connected to earlier, in settings file or in range). Further on, different operational modes are defined for the App, and a configuration option is included in which the user can choose which operational mode the App operates in.

PSV-activation detection operational mode: In this operational mode, the App will automatically connect to all PSV-activation detection type devices included in the current task, and report back for which devices an event has occurred (by coloring/labeling devices in the list). Only devices marked as "included in current task" are shown (this configuration option is enforced when changing to the operational mode). As an option; to reduce battery usage, data may not be downloaded from a device more than once every 24 hours for example or alternatively any other limit may be used.

General mode: In this operational mode, the App will be able to connect to all types of devices and all known devices. The App and sensor can be set up to operate only via encrypted signals and therefore not connectable to other than dedicated units. The App can explicitly be instructed to connect to a device. All events will be shown when connected to a device. Filtering of devices may be done by submitting a task list to the Android or any other OS devices.

The Android App will normally require a minimum of Android version 4.4, or other Apps may also be incorporated. The App will as a start be optimized for a certain brand and type of Android phones to meet market demand, however alternative Apps will be developed as per marked demand. Scanning/searching for devices will be done automatically with a pause between each new scan. The pause between each scan is determined for the specific system on which the sensors are integrated.

Figure 5 illustrates a user interface for an app running on a smartphone, providing the external receiver in an embodiment of the invention. The user interface in this example provides a pressure safety valve reference 501, a status 502 and illustrates when the valve was last checked 503.

**Additional features**

The pressure safety valve activation sensor unit according to the present invention may utilize a standard IMU comprising a number of micro-sensors, as discussed above. For example the micro sensors may also include a gyroscope and/or a magnetometer with extracted data from these sensors used in addition to the accelerometer to aid in identification of an activation event.

In certain embodiments of the invention the sensor unit additionally comprises means to detect sound produced by the valve. This can be used to determine the presence of a leak. In these referenced embodiments the sensor unit comprises an acoustic transducer and the processing unit is further configured to extract sound data from the acoustic transducer and compare the extracted sound data to a predetermined sound pattern associated with the flow of fluid characteristic of a leak in the pressure safety valve in order to determine the presence of a leak and optionally also the magnitude of the leakage. The transmitter is further arranged to transmit leak data to the external receiver.

Leakages from safety valves are a common problem and may be produced following an activation event. Leakages from safety valves are a problem both in the oil and gas industry and in other process industries. The oil and gas industry is a major contributor to greenhouse gas emissions to the atmosphere, both globally, nationally and regionally. A significant portion of these emissions can be linked to leaking process safety valves and are a major source of unwanted greenhouse gas emissions. In another chemical industry, leaks from safety valves are also a major problem. It is therefore desirable for the sensor unit to be able to determine the presence of a leak from a safety valve in addition to the occurrence of an activation event.

Acoustic data detected by an acoustic transducer can be used to identify the presence and magnitude of a leak by comparing extracted data from the acoustic transducer to a predetermined sound pattern produced by a pressure safety valve when leaking.

Acoustic emission (AE) may be used to determine the presence and optionally magnitude of the leak. AE is the transmission of energy in the form of a transient elastic wave when a form of defect (e.g. a fracture or crack) occurs in a material or a leak from the valve is present. When a small amount of liquid or gas leaks through a small opening in a valve, there is a high flow rate through the small opening, which is typically turbulent flow. The leakage creates a sound that will be characteristic of the leakage and can be detected by an acoustic transducer and output as acoustic data.

The processing unit is therefore configured to compare the extracted acoustic emission data against one or more predetermined acoustic data patterns (representative of the sound produced from varying types and magnitudes of leeks) to determine the presence and optionally the type and magnitude of the leak. The predetermined sound patterns (acoustic data patterns) are determined by experiment via utilising the sensor unit on mock leaks on various safety valves to determine the sound patterns produced. In this way, not just the presence but also the magnitude of the leak can be identified. This can be enhanced by using a machine learning algorithm in which the processing unit is trained to reliably identify the presence of a leak and match the extracted data from the acoustic transducer to a predetermined sound pattern corresponding to a specific magnitude of leak.

The acoustic transducer is typically configured to operate in the frequency range up to 1 MHz, to estimate the size of the leak. Using a wide frequency range makes it possible to distinguish between leakage and background noise, since the leakage typically has a different frequency signal than the background noise.

The processing unit is configured to separate the signal from background noise before matching the data to the predetermined pattern. Preferably the processing algorithm is adapted to operate in the frequency range below 1 MHz as this allows the use of cheap, commercially available acoustic transducers to achieve robust leakage detection and quantification in the environment with background noise. Such acoustic transducers are also low power such that they do not significantly deplete the battery of the sensor unit when employed.

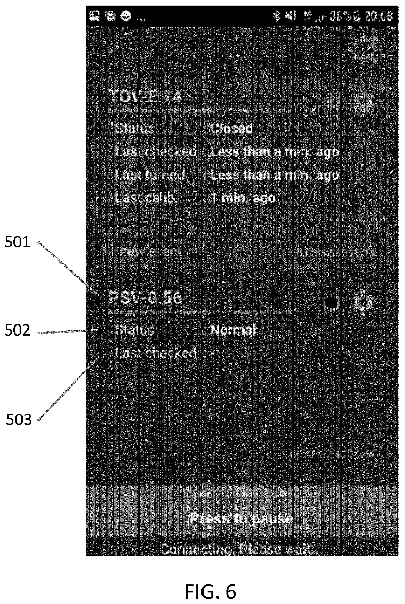

Utilising an acoustic transducer and processing unit configured in this way allows leak data in addition to event data to be transmitted to the external receiver. For example a warning regarding a leak and the estimated magnitude may be provided on the user interface of Figure 6.

The pressure safety valve activation sensor of the current invention provides a reliable and cost-effective means to detect pressure safety valve activation events. The use of a comparison of detected acceleration data against predetermined data indicative of an activation event provides fast and reliable detection of "pop" events. The use of micro sensors, in particular in the form of an accelerometer, the sensor unit is small, lightweight and straightforward to attach the outside of a pressure safety valve. Such micro sensors are also energy efficient and low cost. The low cost of the sensor unit allows the installation in large numbers on all PSVs and by this get a complete picture of the current state and operational history of the PSVs.

**Claims**

1. A pressure safety valve activation sensor unit (10), comprising:

   a sensor housing (12) for placement on an outside of a pressure safety valve (20);
   a print circuit board assembly within the sensor housing (12), the print circuit board assembly comprising:

   one or more micro sensors, the one or more micro sensors including an accelerometer;
   a processing unit configured to extract acceleration data indicative of valve vibrations registered by the accelerometer and compare the acceleration data to a predetermined vibration pattern associated with the activation of the pressure safety valve to determine whether an activation event of the pressure safety valve has occurred; and
   a transmitter for wirelessly transmitting activation event data to an external receiver.

2. The pressure safety valve activation sensor unit (10) according to claim 1 wherein the processing unit is configured to determine that an activation event has occurred when the extracted acceleration data satisfies one or more of:

the magnitude of the acceleration data is above a predetermined threshold value;

the duration of the acceleration data corresponding to the vibrations is above a predetermined threshold value;

the frequency of the acceleration data corresponding to the vibrations is within a predetermined range; and

the calculated excess Kurtosis of the acceleration data corresponding to the vibrations is within a predetermined range.

3. The pressure safety valve activation sensor unit (10) according to claim 2 wherein the processing unit is configured to compare the acceleration data to a predetermined vibration pattern to determine that an activation event has occurred by determining each of the following conditions are met:

(i) the extracted acceleration data exceeds a predetermined threshold magnitude value;

(ii) the extracted acceleration data is within a predetermined frequency range;

(iii) conditions (i) and (ii) are met for a duration which exceeds a predetermined minimum time threshold.

4. The pressure safety valve activation sensor unit (10) according to claim 3 wherein the processing unit is configured to determine conditions (i) and (ii) are met by:

extracting X, Y and Z components of the vibration data from the accelerometer;

high pass filtering the X, Y and Z components of the vibration data;

calculating the root mean square of the filtered X, Y and Z components of the vibration data;

low pass filtering the calculated root mean square;

comparing the filtered root mean square to a predetermined threshold magnitude value;

wherein the processing unit is configured to determine condition (iii) is preferably met by:

repeatedly performing the each of the preceding steps of the claim while the filtered root mean square exceeds the predetermined threshold magnitude value;

determining an activation event duration as the time during which the filtered root mean square remains above the predetermined detection limit;

comparing the activation event duration to a predetermined minimum time threshold.

5. The pressure safety valve activation unit (10) according to claims 3 or 4 wherein the processing unit is configured to only determine that an activation event has occurred if, in addition, a calculated excess kurtosis of the acceleration data is above a threshold value.

6. The pressure safety valve activation sensor unit (10) according to any preceding claim wherein the pressure safety valve activation sensor unit (10) is configured to switch between a lower power mode, in which the sample rate of the accelerometer is lower, and a detection mode in which the sample rate of the accelerator is higher, and is preferably configured to switch from the lower power mode to the detection mode

when a detected magnitude of acceleration is above a threshold value.

7. The pressure safety valve activation sensor unit (10) according to any preceding claim wherein the one or more micro sensors further include:

an acoustic transducer;

wherein the processing unit is further configured to extract data from the acoustic transducer and compare the extracted data to a predetermined acoustic data pattern associated with the flow of fluid characteristic of a leak in the pressure safety valve in order to determine the presence of a leak;

wherein the transmitter is further arranged to transmit leak data to an external receiver.

8. A method for detecting the activation of a pressure safety valve, the method comprising the following steps:

placement of a pressure safety valve activation sensor unit (10) on an outside of the pressure safety valve, where the pressure safety valve activation sensor unit (10) comprises one or more micro sensors including an accelerometer;

extracting acceleration data registered by the accelerometer, the acceleration data indicative of valve vibrations;

comparing the acceleration data to a predetermined vibration pattern associated with the activation of the pressure safety valve (20) to determine whether an activation event of the pressure safety valve has occurred; and

wirelessly transmitting activation event data to an external receiver.

9. A method according to claim 8, wherein comparing the acceleration data to a predetermined vibration pattern associated with the activation of the pressure safety valve (20) to determine whether an activation event of the pressure safety valve (20) has occurred comprises:

determining whether one or more of the following conditions is met:

the magnitude of the acceleration data is above a predetermined threshold value;
the duration of the acceleration data corresponding to the vibrations is above a predetermined threshold value;
the frequency of the acceleration data corresponding to the vibrations is within a predetermined range; and
the calculated excess Kurtosis of the acceleration data is within a predetermined range.

10. A method according to claim 9, wherein comparing the acceleration data to a predetermined vibration pattern associated with the activation of the pressure safety valve to determine whether an activation event of the pressure safety valve (20) has occurred comprises:
determining each of the following conditions are met:

(i) the extracted acceleration data exceeds a predetermined threshold magnitude value;
(ii) the extracted acceleration data is within a predetermined frequency range; and
(iii) conditions (i) and (ii) are met for a duration which exceeds a predetermined minimum time threshold.

11. The method according to claim 10, wherein determining conditions (i) and (ii) are met comprises:

extracting X, Y and Z components of the vibration data from the accelerometer;
high pass filtering the X, Y and Z components of the vibration data;
calculating the root mean square of the filtered X, Y and Z components of the vibration data;
low pass filtering the calculated root mean square;
comparing the filtered root mean square to a predetermined threshold magnitude value;
wherein determining condition (iii) is met preferably comprises:

repeatedly performing the preceding steps of the claim while the filtered root mean square exceeds the predetermined threshold magnitude value;
determining an activation event duration as the time during which the filtered root mean square remains above the predetermined detection limit;
comparing the activation event duration to a predetermined minimum time threshold.

12. The method according to claim 10 or 11, wherein comparing the acceleration data to a predetermined vibration pattern associated with the activation of the pressure safety valve to determine whether an activation event of the pressure safety valve (20) has occurred further comprises:

calculating an excess kurtosis of the acceleration data;
comparing the calculated excess kurtosis value to a predetermined minimum threshold.

13. The method according to any of claim 9 to 12 further comprising:
switching between a lower power mode, in which the accelerometer data is extracted at a lower sample rate, and a detection mode in accelerometer data is extracted at a higher sample rate.

14. The method according to claim 13 wherein switching to the detection mode is performed when the detected magnitude of acceleration is above a threshold value.

15. The method according to any of claims 9 to 14 wherein the one or more micro sensors further include an acoustic transducer, the method further comprising:

extracting data from the acoustic transducer; and
comparing the extracted data to a predetermined acoustic data pattern associated with the flow of fluid characteristic of a leak in the pressure safety valve in order to determine the presence of a leak;
transmitting leak data to an external receiver;
the method preferably further comprising:
comparing the extracted data against a library of acoustic data patterns to estimate the magnitude of the leak.

**Patentansprüche**

1. Sensoreinheit (10) für eine Drucksicherheitsventilaktivierung, umfassend:

ein Sensorgehäuse (12) zur Platzierung an einer Außenseite eines Drucksicherheitsventils (20);
eine Leiterplattenanordnung innerhalb des Sensorgehäuses (12), wobei die Leiterplattenanordnung umfasst:

einen oder mehrere Mikrosensoren, wobei der eine oder die mehreren Mikrosensoren einen Beschleunigungsmesser enthalten;
eine Verarbeitungseinheit, die konfiguriert ist, um Beschleunigungsdaten zu extrahieren, die die vom Beschleunigungsmesser registrierten Ventilvibrationen anzeigen, und die Beschleunigungsdaten mit einem vorgegebenen Vibrationsmuster zu vergleichen, das mit der Aktivierung des Drucksicherheitsventils verbunden ist, um zu bestimmen, ob ein Aktivierungsereignis des Drucksicherheitsventils aufgetreten ist; und einen Sender zum drahtlosen Übertragen von Aktivierungsereignisdaten an einen externen Empfänger.

2. Sensoreinheit (10) für eine Drucksicherheitsventilaktivierung nach Anspruch 1, wobei die Verarbeitungseinheit konfiguriert ist, um zu bestimmen, dass ein Aktivierungsereignis aufgetreten ist, wenn die extrahierten Beschleunigungsdaten eine oder mehrere der folgenden Bedingungen erfüllen:

die Größe der Beschleunigungsdaten liegt über einem vorgegebenen Schwellenwert;
die Dauer der den Vibrationen entsprechenden Beschleunigungsdaten liegt über einem vorgegebenen Schwellenwert;
die Frequenz der den Vibrationen entsprechenden Beschleunigungsdaten liegt innerhalb eines vorgegebenen Bereichs; und
die berechnete Exzesswölbung der den Vibrationen entsprechenden Beschleunigungsdaten liegt innerhalb eines vorgegebenen Bereichs.

3. Sensoreinheit (10) für eine Drucksicherheitsventilaktivierung nach Anspruch 2, wobei die Verarbeitungseinheit konfiguriert ist, um die Beschleunigungsdaten mit einem vorgegebenen Vibrationsmuster zu vergleichen, um zu bestimmen, dass ein Aktivierungsereignis aufgetreten ist, indem bestimmt wird, dass jede der folgenden Bedingungen erfüllt ist:

(i) die extrahierten Beschleunigungsdaten überschreiten einen vorgegebenen Schwellengrößenwert;
(ii) die extrahierten Beschleunigungsdaten liegen innerhalb eines vorgegebenen Frequenzbereichs;
(iii) die Bedingungen (i) und (ii) sind für eine Dauer erfüllt, die einen vorgegebenen Mindestzeitschwellenwert überschreitet.

4. Sensoreinheit (10) für eine Drucksicherheitsventilaktivierung nach Anspruch 3, wobei die Verarbeitungseinheit konfiguriert ist, um zu bestimmen, dass die Bedingungen (i) und (ii) erfüllt sind, durch:

Extrahieren von X-, Y- und Z-Komponenten der Vibrationsdaten aus dem Beschleunigungsmesser;

Hochpassfilterung der X-, Y- und Z-Komponenten der Vibrationsdaten;
Berechnen des quadratischen Mittelwerts der gefilterten X-, Y- und Z-Komponenten der Vibrationsdaten;
Tiefpassfilterung des berechneten quadratischen Mittelwerts;
Vergleichen des gefilterten quadratischen Mittelwerts mit einem vorgegebenen Schwellengrößenwert;
wobei die Verarbeitungseinheit konfiguriert ist, um zu bestimmen, dass die Bedingung (iii) vorzugsweise erfüllt wird durch:

wiederholtes Ausführen jedes der vorhergehenden Schritte des Anspruchs, während der gefilterte quadratische Mittelwert den vorgegebenen Schwellengrößenwert überschreitet;
Bestimmen einer Aktivierungsereignisdauer als die Zeit, während der der gefilterte quadratische Mittelwert über der vorgegebenen Nachweisgrenze bleibt;
Vergleichen der Aktivierungsereignisdauer mit einem vorgegebenen Mindestzeitschwellenwert.

5. Sensoreinheit (10) für eine Drucksicherheitsventilaktivierung nach Anspruch 3 oder 4, wobei die Verarbeitungseinheit so konfiguriert ist, dass sie nur bestimmt, dass ein Aktivierungsereignis aufgetreten ist, wenn zusätzlich eine berechnete Exzesswölbung der Beschleunigungsdaten über einem Schwellenwert liegt.

6. Sensoreinheit (10) für eine Drucksicherheitsventilaktivierung nach einem vorhergehenden Anspruch, wobei die Sensoreinheit (10) für eine Drucksicherheitsventilaktivierung konfiguriert ist, um zwischen einem Modus mit niedrigerer Leistung, in dem die Abtastrate des Beschleunigungsmessers niedriger ist, und einem Erfassungsmodus umzuschalten, in dem die Abtastrate des Beschleunigers höher ist, und vorzugsweise konfiguriert ist, um vom Modus mit niedrigerer Leistung in den Erfassungsmodus umgeschaltet zu werden, wenn eine erfasste Beschleunigungsgröße über einem Schwellenwert liegt.

7. Sensoreinheit (10) für eine Drucksicherheitsventilaktivierung nach einem vorhergehenden Anspruch, wobei der eine oder die mehreren Mikrosensoren ferner enthalten:

einen akustischen Wandler;
wobei die Verarbeitungseinheit ferner konfiguriert ist, um Daten aus dem akustischen Wandler zu extrahieren und die extrahierten Daten mit einem vorgegebenen akustischen Datenmuster zu vergleichen, das dem Fluidfluss zugeordnet ist, der für ein Leck im Drucksicherheitsventil charakteristisch ist, um das Vorhandensein eines Lecks zu bestimmen;

wobei der Sender ferner so angeordnet ist, dass er Leckdaten an einen externen Empfänger überträgt.

8. Verfahren zum Erfassen der Aktivierung eines Drucksicherheitsventils, wobei das Verfahren die folgenden Schritte umfasst:

Platzieren einer Sensoreinheit (10) für eine Drucksicherheitsventilaktivierung an einer Außenseite des Drucksicherheitsventils, wobei die Sensoreinheit (10) für eine Drucksicherheitsventilaktivierung einen oder mehrere Mikrosensoren umfasst, der/die einen Beschleunigungsmesser enthält/enthalten;

Extrahieren von Beschleunigungsdaten, die vom Beschleunigungsmesser registriert wurden, wobei die Beschleunigungsdaten Ventilvibrationen anzeigen;

Vergleichen der Beschleunigungsdaten mit einem vorgegebenen Vibrationsmuster, das mit der Aktivierung des Drucksicherheitsventils (20) verbunden ist, um zu bestimmen, ob ein Aktivierungsereignis des Drucksicherheitsventils aufgetreten ist; und

drahtlose Übertragung von Aktivierungsereignisdaten an einen externen Empfänger.

9. Verfahren nach Anspruch 8, wobei das Vergleichen der Beschleunigungsdaten mit einem vorgegebenen Vibrationsmuster, das mit der Aktivierung des Drucksicherheitsventils (20) verbunden ist, um zu bestimmen, ob ein Aktivierungsereignis des Drucksicherheitsventils (20) aufgetreten ist, Folgendes umfasst:

Bestimmen, ob eine oder mehrere der folgenden Bedingungen erfüllt sind:

die Größe der Beschleunigungsdaten liegt über einem vorgegebenen Schwellenwert;

die Dauer der den Vibrationen entsprechenden Beschleunigungsdaten liegt über einem vorgegebenen Schwellenwert;

die Frequenz der den Vibrationen entsprechenden Beschleunigungsdaten liegt innerhalb eines vorgegebenen Bereichs; und

die berechnete Exzesswölbung der Beschleunigungsdaten liegt innerhalb eines vorgegebenen Bereichs.

10. Verfahren nach Anspruch 9, wobei das Vergleichen der Beschleunigungsdaten mit einem vorgegebenen Vibrationsmuster, das mit der Aktivierung des Drucksicherheitsventils verbunden ist, um zu bestimmen, ob ein Aktivierungsereignis des Drucksicherheitsventils (20) aufgetreten ist, Folgendes umfasst:

Bestimmen, dass jede der folgenden Bedingungen erfüllt ist:

(i) die extrahierten Beschleunigungsdaten überschreiten einen vorgegebenen Schwellengrößenwert;

(ii) die extrahierten Beschleunigungsdaten liegen innerhalb eines vorgegebenen Frequenzbereichs; und

(iii) die Bedingungen (i) und (ii) sind für eine Dauer erfüllt, die einen vorgegebenen Mindestzeitschwellenwert überschreitet.

11. Verfahren nach Anspruch 10, wobei das Bestimmen, dass die Bedingungen (i) und (ii) erfüllt sind, umfasst:

Extrahieren von X-, Y- und Z-Komponenten der Vibrationsdaten aus dem Beschleunigungsmesser;

Hochpassfilterung der X-, Y- und Z-Komponenten der Vibrationsdaten;

Berechnen des quadratischen Mittelwerts der gefilterten X-, Y- und Z-Komponenten der Vibrationsdaten;

Tiefpassfilterung des berechneten quadratischen Mittelwerts;

Vergleichen des gefilterten quadratischen Mittelwerts mit einem vorgegebenen Schwellengrößenwert;

wobei das Bestimmen, dass Bedingung (iii) erfüllt ist, vorzugsweise umfasst:

wiederholtes Ausführen der vorhergehenden Schritte des Anspruchs, während der gefilterte quadratische Mittelwert den vorgegebenen Schwellengrößenwert überschreitet;

Bestimmen einer Aktivierungsereignisdauer als die Zeit, während der der gefilterte quadratische Mittelwert über der vorgegebenen Nachweisgrenze bleibt;

Vergleichen der Aktivierungsereignisdauer mit einem vorgegebenen Mindestzeitschwellenwert.

12. Verfahren nach Anspruch 10 oder 11, wobei das Vergleichen der Beschleunigungsdaten mit einem vorgegebenen Vibrationsmuster, das mit der Aktivierung des Drucksicherheitsventils verbunden ist, um zu bestimmen, ob ein Aktivierungsereignis des Drucksicherheitsventils (20) aufgetreten ist, ferner umfasst:

Berechnen einer Exzesswölbung der Beschleunigungsdaten;
Vergleichen der berechneten Exzesswölbung mit einem vorgegebenen Mindestschwellenwert.

13. Verfahren nach einem der Ansprüche 9 bis 12, ferner Folgendes umfassend:
Umschalten zwischen einem Modus mit niedrigerer Leistung, bei dem die Beschleunigungsmesserdaten mit einer niedrigeren Abtastrate extrahiert werden, und einem Erfassungsmodus, bei dem die Beschleunigungsmesserdaten mit einer höheren Abtastrate extrahiert werden.

14. Verfahren nach Anspruch 13, wobei das Umschalten in den Erfassungsmodus durchgeführt wird, wenn die erfasste Größe der Beschleunigung über einem Schwellenwert liegt.

15. Verfahren nach einem der Ansprüche 9 bis 14, wobei der eine oder die mehreren Mikrosensoren ferner einen akustischen Wandler enthalten, wobei das Verfahren ferner umfasst:

Extrahieren von Daten aus dem akustischen Wandler; und
Vergleichen der extrahierten Daten mit einem vorgegebenen akustischen Datenmuster, das dem Fluidfluss zugeordnet ist, der für ein Leck im Drucksicherheitsventil charakteristisch ist, um das Vorhandensein eines Lecks zu bestimmen;
Übertragen von Leckdaten an einen externen Empfänger;
wobei das Verfahren vorzugsweise ferner umfasst:
Vergleichen der extrahierten Daten mit einer Bibliothek von akustischen Datenmustern, um die Größe des Lecks abzuschätzen.

**Revendications**

1. Unité de capteur d'activation de soupape de sécurité de pression (10), comprenant :

un boîtier de capteur (12), à placer à l'extérieur d'une soupape de sécurité de pression (20) ;
un ensemble carte de circuit imprimé à l'intérieur du boîtier de capteur (12), l'ensemble carte de circuit imprimé comprenant :

un ou plusieurs microcapteurs, le ou les microcapteurs comprenant un accéléromètre ;
une unité de traitement, configurée pour extraire des données d'accélération indiquant les vibrations de soupape enregistrées par l'accéléromètre et pour comparer les données d'accélération à un modèle de vibration prédéfini, associé à l'activation de la soupape de sécurité de pression, pour déterminer si un événement d'activation de la soupape de sécurité de pression s'est produit ; et
un émetteur, permettant de transmettre sans fil des données d'événement d'activation à un récepteur externe.

2. Unité de capteur d'activation de soupape de sécurité de pression (10) selon la revendication 1, dans laquelle l'unité de traitement est configurée pour déterminer qu'un événement d'activation s'est produit lorsque les données d'accélération extraites remplissent une ou plusieurs des conditions suivantes :

l'amplitude des données d'accélération dépasse une valeur seuil prédéfinie ;
la durée des données d'accélération correspondant aux vibrations dépasse une valeur seuil prédéfinie ;
la fréquence des données d'accélération correspondant aux vibrations se situe dans une plage prédéfinie ; et
l'excès de kurtosis calculé des données d'accélération correspondant aux vibrations se situe dans une plage prédéfinie.

3. Unité de capteur d'activation de soupape de sécurité de pression (10) selon la revendication 2, dans laquelle l'unité de traitement est configurée pour comparer les données d'accélération à un modèle prédéfini de vibration pour déterminer qu'un événement d'activation s'est produit, par détermination que chacune des conditions suivantes est remplie :

(i) les données d'accélération extraites excèdent une valeur d'amplitude seuil prédéfinie ;
(ii) les données d'accélération extraites se situent dans une plage de fréquences prédéfinie ;
(iii) les conditions (i) et (ii) sont remplies pendant une durée qui excède un seuil de temps minimal prédéfini.

4. Unité de capteur d'activation de soupape de sécurité de pression (10) selon la revendication 3, dans laquelle l'unité de traitement est configurée pour déterminer que les conditions (i) et (ii) sont remplies :

par extraction des composantes X, Y et Z des données de vibration de l'accéléromètre ;
par filtrage passe-haut des composantes X, Y et Z des données de vibration ;
par calcul de la racine carrée moyenne des composantes filtrées X, Y et Z des données de vibration ;

par filtrage passe-bas de la moyenne quadratique calculée ;

par comparaison de la moyenne quadratique filtrée à une valeur d'amplitude seuil prédéfinie ;

l'unité de traitement étant configurée pour déterminer que la condition (iii) est de préférence remplie :

par exécution répétée de chacune des étapes précédentes de la revendication pendant que la moyenne quadratique filtrée excède la valeur d'amplitude seuil prédéfinie ;

par détermination d'une durée d'événement d'activation comme le temps pendant lequel la moyenne quadratique filtrée reste au-dessus de la limite de détection prédéfinie ;

par comparaison de la durée de l'événement d'activation à un seuil de temps minimal prédéfini.

5. Unité de capteur d'activation de soupape de sécurité de pression (10) selon la revendication 3 ou 4, dans laquelle l'unité de traitement est configurée pour déterminer qu'un événement d'activation s'est produit seulement si, en outre, un excès de kurtosis calculé des données d'accélération excède une valeur seuil.

6. Unité de capteur d'activation de soupape de sécurité de pression (10) selon l'une quelconque des revendications précédentes, l'unité de capteur d'activation de soupape de sécurité de pression (10) étant configurée pour commuter entre un mode à faible consommation, dans lequel la fréquence d'échantillonnage de l'accéléromètre est plus basse, et un mode de détection, dans lequel la fréquence d'échantillonnage de l'accélérateur est plus élevée, et étant de préférence configurée pour passer du mode à faible consommation au mode de détection lorsqu'une amplitude détectée de l'accélération dépasse une valeur seuil.

7. Unité de capteur d'activation de soupape de sécurité de pression (10) selon l'une quelconque des revendications précédentes, dans laquelle le ou les micro-capteurs comprennent en outre :

un transducteur acoustique ;

l'unité de traitement étant en outre configurée pour extraire des données du transducteur acoustique et pour comparer les données extraites à un motif de données acoustiques prédéfini associé au débit de fluide caractéristique d'une fuite dans la soupape de sécurité de pression, afin de déterminer la présence d'une fuite ;

l'émetteur étant en outre agencé pour transmettre des données de fuite à un récepteur externe.

8. Procédé de détection de l'activation d'une soupape de sécurité de pression, le procédé comprenant les étapes suivantes :

le placement d'une unité de capteur d'activation de soupape de sécurité de pression (10) sur un extérieur de la soupape de sécurité de pression, l'unité de capteur d'activation de soupape de sécurité de pression (10) comprenant un ou plusieurs micro-capteurs comportant un accéléromètre ;

l'extraction de données d'accélération enregistrées par l'accéléromètre, les données d'accélération indiquant des vibrations de la soupape ;

la comparaison des données d'accélération à un modèle de vibration prédéfini associé à l'activation de la soupape de sécurité de pression (20) pour déterminer si un événement d'activation de la soupape de sécurité de pression s'est produit ; et

la transmission sans fil de données d'événement d'activation à un récepteur externe.

9. Procédé selon la revendication 8, selon lequel la comparaison des données d'accélération à un modèle de vibration prédéfini associé à l'activation de la soupape de sécurité de pression (20) pour déterminer si un événement d'activation de la soupape de sécurité de pression (20) s'est produit comprend :
le fait de déterminer si une ou plusieurs des conditions suivantes sont remplies :

l'amplitude des données d'accélération dépasse une valeur seuil prédéfinie ;

la durée des données d'accélération correspondant aux vibrations dépasse une valeur seuil prédéfinie ;

la fréquence des données d'accélération correspondant aux vibrations se situe dans une plage prédéfinie ; et

l'excès de kurtosis calculé des données d'accélération se situe dans une plage prédéfinie.

10. Procédé selon la revendication 9, selon lequel la comparaison des données d'accélération à un modèle de vibration prédéfini associé à l'activation de la soupape de sécurité de pression pour déterminer si un événement d'activation de la soupape de sécurité de pression (20) s'est produit comprend :
le fait de déterminer que chacune des conditions suivantes est remplie :

(i) les données d'accélération extraites excèdent une valeur d'amplitude seuil prédéfinie ;

(ii) les données d'accélération extraites se situent dans une plage de fréquences prédéfinie ; et

(iii) les conditions (i) et (ii) sont remplies pendant une durée qui excède un seuil de temps minimal prédéfini.

**11.** Procédé selon la revendication 10, dans lequel le fait de déterminer que les conditions (i) et (ii) sont remplies comprend :

l'extraction des composantes X, Y et Z des données de vibration de l'accéléromètre ;
le filtrage passe-haut des composantes X, Y et Z des données de vibration ;
le calcul de la moyenne quadratique des composantes filtrées X, Y et Z des données de vibration ;
le filtrage passe-bas de la moyenne quadratique calculée ;
la comparaison de la moyenne quadratique filtrée à une valeur d'amplitude seuil prédéfinie ;
la détermination du fait que la condition (iii) est remplie comprenant de préférence :

l'exécution répétée des étapes précédentes de la revendication pendant que la moyenne quadratique filtrée excède la valeur d'amplitude seuil prédéfinie ;
la détermination d'une durée d'événement d'activation comme le temps pendant lequel la moyenne quadratique filtrée reste au-dessus de la limite de détection prédéfinie ;
la comparaison de la durée de l'événement d'activation à un seuil de temps minimal prédéfini.

**12.** Procédé selon la revendication 10 ou 11, selon lequel la comparaison des données d'accélération à un modèle de vibration prédéfini associé à l'activation de la soupape de sécurité de pression pour déterminer si un événement d'activation de la soupape de sécurité de pression (20) s'est produit comprend en outre :

le calcul d'un excès de kurtosis des données d'accélération ;
la comparaison de la valeur de l'excès de kurtosis calculé à un seuil minimal prédéfini.

**13.** Procédé selon l'une quelconque des revendications 9 à 12, comprenant en outre :
la commutation entre un mode à faible consommation, dans lequel les données d'accéléromètre sont extraites à une fréquence d'échantillonnage plus basse, et un mode de détection, dans lequel les données d'accéléromètre sont extraites à une fréquence d'échantillonnage plus élevée.

**14.** Procédé selon la revendication 13, selon lequel la commutation vers le mode de détection a lieu lorsque l'amplitude détectée de l'accélération dépasse une valeur seuil.

**15.** Procédé selon l'une quelconque des revendications 9 à 14, selon lequel le ou les microcapteurs comprennent en outre un transducteur acoustique, le procédé comprenant en outre :

l'extraction de données du transducteur acoustique ; et
la comparaison des données extraites à un modèle de données acoustiques prédéfini associé au débit de fluide caractéristique d'une fuite dans la soupape de sécurité de pression, pour déterminer la présence d'une fuite ;
la transmission des données de fuite à un récepteur externe ;
le procédé comprenant en outre de préférence :
la comparaison des données extraites à une bibliothèque de modèles de données acoustiques pour estimer l'ampleur de la fuite.

Fig. 1

Fig. 2

FIG. 3

$$rss = \sqrt{x^2 + y^2 + z^2}$$

Acc X → HPF

Acc Y → HPF

Acc Z → HPF

LPF

Comparator

Duration Limit

POP Detection

Detection Limit

310

320

330

340

350

360

370

380

300

EP 3 612 757 B1

Fig. 4a

400

- 401 Start
- 402 Init:
  - HW Drivers
  - Bluetooth
  - IMU
- 403 IMU: Enter low power accel mod Low Sample Rate
- 404 CPU - sleep
- 405 Wakeup triggered by accel MOV
- 406 IMU: High Sample Rate
- 407 Start Event Detect
- 408 Wait for new sample
- 409 High pass filter to remove graviation
- 410 Detection Function = SQRT(x²+y²+z²)
  x, y, z = axis accelerometer
- 411 Low pass to detect signal
- Output Sample(s)
- 412 S > Detection lim.
  Yes / No
- 413 Event duration > limit = 50ms
  Yes / No
- 414 Register Event

Start — 401

Init:
- HW drivers
- Bluetooth
- IMU
— 402

IMU:
- Enter low power accel mode
- Low sample rate
— 403

CPU – sleep mode — 404

Wakeup triggered by accel MOV — 405

IMU:
- High sample rate
— 406

Start Event Detection — 407

Wait for new sample 3-axis accelerometer — 408

High pass filter to remove gravitation — 409

Calculate 3 axis acceleration vector length — 410

Low pass to detect signal — 411

signal > limit — 412
Yes
No

Event duration > limit — 413
No
Yes

Calculate Kurtosis — 421

Kurtosis > limit — 422
No
Yes

RegisterEvent — 414

400

End Event Detection

Fig. 4b

FIG. 5

FIG. 6

**EP 3 612 757 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003019277 A